# EUROPEAN PATENT SPECIFICATION

(11) **EP 2 157 215 B1**
(45) Date of publication and mention of the grant of the patent: **28.12.2011**
(21) Application number: 08777147.3
(22) Date of filing: 11.06.2008
(51) Int. Cl.: D01F 6/94, D03D 15/00, D03D 15/08, C08F 8/32

(54) **POLYURETHANE ELASTIC FIBER**
ELASTISCHE POLYURETHANFASER
FIBRE ÉLASTIQUE DE POLYURÉTHANE

(30) Priority: 12.06.2007 JP 2007155236
(43) Date of publication of application: 24.02.2010
(73) Proprietor: Asahi Kasei Fibers Corporation, Osaka-shi, Osaka 530-8205 (JP)
(72) Inventor: KOJIMA, Junichi, Tokyo 101-8101 (JP); IWANAMI, Taisuke, Tokyo 101-8101 (JP)
(74) Representative: von Kreisler Selting Werner
(86) International application number: PCT/JP2008/060709
(87) International publication number: WO 2008/153080

(56) References cited:
- JP-A- 62 045 650
- JP-A- 2003 201 683
- JP-A- 2004 060 062
- US-A- 3 535 415

## Description

### [TECHNICAL FIELD]

The present invention relates to polyurethane elastic fibers, and more specifically it relates to polyurethane elastic fibers with uniform dyeability that have a low degree of color unevenness and grinning during dyeing with acidic dyes, as well as high fastness, and which have deep dyeing properties equivalent to polyamide fibers and the like which are used as conventional acidic dyeable fibers.

### [BACKGROUND ART]

Elastic fibers composed of polymers comprising polyurethane or polyurethane-urea as the major structural unit (hereinafter referred to as "polyurethane elastic fibers") exhibit excellent performance including elastic properties and chemical resistance, and are therefore woven and knitted in mixture mainly with polyamide fibers or polyester fibers and widely used as expanding materials for numerous types of clothing, including foundations, socks, panty stockings and sportswear. In recent years, it has been a goal to increase the polyurethane elastic fiber contents of fabrics in order to further improve their stretch function as clothing.

However, since polyurethane elastic fibers do not have effective dyeing sites for acidic dyes in the molecules of the polyurethane polymers or polyurethane-urea polymers (hereinafter referred to as "polyurethane-based polymers") composing them, when fabrics thereof knitted or woven in mixture with polyamide fibers are dyed with acidic dyes, the polyurethane elastic fibers have poor dyeability compared to the polyamide fibers that have numerous dyeing sites, resulting in a condition in which the fibers simply retain the dye, or in other words are merely "stained" with the dye. As a result, it is not only impossible to ensure a deep dyeing property equivalent to that of polyamide fibers, but crocking tends to occur during laundering, and this causes "grinning" and "glare" which significantly lower the visual quality of the final product. This tendency is particularly notable with deep colored products, causing reduced visual quality due to a lack of clarity of deep color, i.e. depth of the fabric color in the case of clothing, and depending on the purpose of use this may place restrictions on the mixing ratio of the polyurethane elastic fibers. Other kinds of fabric staining due to crocking can also pose a significant problem and can place restrictions on the use of polyurethane elastic fibers.

Methods of adding tertiary nitrogen atoms to the molecular chains of polyurethane polymers are known as means of solving these problems (see Patent documents 1-4 and Non-patent document 1), but when such methods are employed it is not only difficult to achieve the same level of deep dyeing properties as polyamide fibers, but in some cases the physical properties of the polyurethane elastic fibers are impaired.

There have also been proposed methods of mixing polyurethane polymers with dye affinity improvers that bind acidic dyes (see Patent documents 5-7), but such methods have not been capable of producing deep dyeing properties and high washing fastness with knitted fabrics.
In addition, "mass-colored filaments" wherein the polyurethane fiber itself is colored, have also been proposed (see Patent document 8), but they are not suitable for different types of color tones and the uses thereof have therefore been limited.

There has also been developed a method for improving the deep dyeing property by adding a polymer with a maleimide structure containing a tertiary nitrogen as a dyeing improver (see Patent document 9), but since some reactive amines, such as the unreacted portions of the diamines as one of the starting materials, are present in known polymers comprising maleimide structures containing tertiary nitrogens, the dye in polyurethane elastic fibers containing such a polymer tends to migrate onto nylon white fabrics during laundering together with nylon white fabrics after dyeing. Also, it has been found that the dyeing improvers used in such polymers can cause coloring and gelling with day-to-day changes. Such coloring and gelling affect the hue or spinning stability of the fibers.

[Patent document 1] Japanese Examined Patent Publication No. 39-23097
[Patent document 2] Japanese Examined Patent Publication No. 47-51645
[Patent document 3] Japanese Examined Patent Publication No. 59-12789
[Patent document 4] Japanese Examined Patent Publication No. 61-7212
[Patent document 5] Japanese Unexamined Patent Publication No. 64-52889
[Patent document 6] Japanese Unexamined Patent Publication No. 2000-313802
[Patent document 7] Japanese Unexamined Patent Publication No. 2001-40587
[Patent document 8] Japanese Unexamined Patent Publication No. 2004-60062
[Patent document 9] Japanese Examined Patent Publication No. 3-6177
[Non-patent document 1] Journal of the Society of Rheology, Japan, 2001, Vol. 29, P191
JP-A-62-045650 and JP-A-2003-201683 disclose polyurethane compositions comprising a further polymeric compound having a maleimide structure including isobutylene units.

### [DISCLOSURE OF THE INVENTION]

### [Problems to be Solved by the Invention]

In light of the aforementioned problems of the prior art, it is an object of the present invention to provide polyurethane elastic fibers that, when dyed with acidic dyes, exhibit a deep dyeing property and high fastness equivalent to those of polyamide fibers used as a companion material in mixed knitted and woven fabrics, while also exhibiting excellent spinning stability.

### [Means for Solving the Problems]

The present inventors have found that polyurethane elastic fibers comprising a polymer with a specific maleimide structure have a deep dyeing property equivalent to those of polyamide fibers and high fastness while also allowing stable spinning, and on this basis we have completed this invention.

The present invention is as follows:
1. Polyurethane elastic fibers comprising 0.2 wt%-10 wt% of a polymer with a maleimide structure comprising an isobutylene unit represented by the following formula (I) and a maleimide unit represented by the following formula (II) (wherein R¹ represents a C₂₋₆ straight-chain or branched alkylene group, and R² and R³ may be the same or different and each represents a C₁₋₆ straight-chain or branched alkyl group), having a Blue L value of 20-50 after laundering according to JIS L0844 A2 for dyeing of a single-loop tube-knit fabric with a specific blue acidic dye, and having a staining degree of grade 3.5 or greater on nylon fabrics, wherein the maleimide structure-containing polymer has a reactive amine content of no greater than 5.0 x 10⁻² millimole equivalents per gram of polymer 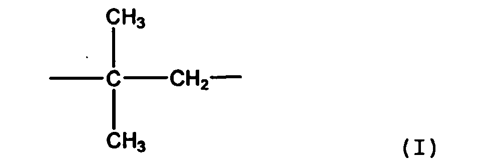 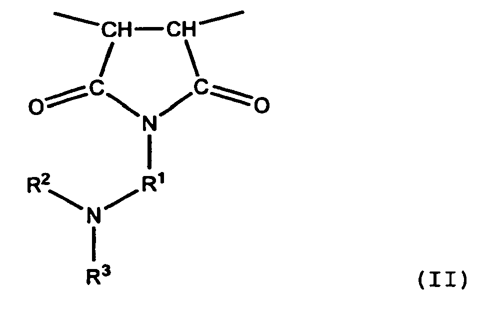 wherein the Blue L value is evaluated as described in paragraph [0035].
2. Polyurethane elastic fibers according to item 1,
   wherein the density of dyeing sites for the acidic dye are at least 7.0 × 10⁻³ millimole equivalent and no greater than 3.5 × 10⁻¹ millimole equivalent per gram of fibers.
3. Polyurethane elastic fibers according to item 1 or 2, wherein the weight-average molecular weight Mw of the maleimide structure-containing polymer is 80,000-150,000, and Mw/Mn (Mn = number-average molecular weight) is no greater than 3.5.
4. A mixed fabric comprising polyurethane elastic fibers according to any one of items 1 to 3 and another acidic dyeable fiber.
5. A mixed fabric according to item 4, wherein the other acidic dyeable fiber is a polyamide fiber.
6. A mixed fabric comprising polyurethane elastic fibers according to any one of items 1 to 3 and another non-acidic dyeable fiber.
7. A mixed fabric according to item 6, wherein the other non-acidic dyeable fiber is a polyester fiber.

### [Effect of the Invention]

According to the invention, it is possible to achieve high fastness without bleeding on fiber surfaces since the dyeing component in the acidic dye is a high-molecular-weight polymer. Moreover, because of the high dyeing affinity, the dyed quality can be improved and the fibers can be suitably used in various mixed knitted and woven fabrics with polyamide fibers and polyester fibers, including foundations, socks, panty stockings and sportswear. In addition, since the dyeing component is resistant to gelling, the polyurethane elastic fibers of the invention can be supplied in a stable manner.

### BEST MODE FOR CARRYING OUT THE INVENTION

The invention will now be explained in detail.
The polyurethane elastic fibers of the invention are characterized by comprising a polymer containing a maleimide structure.
Polymers with a maleimide structure to be used for the invention include polymers comprising an isobutylene unit represented by the following formula (I) and a maleimide unit represented by the following formula (II) (wherein R¹ represents a C₂₋₆ straight-chain or branched alkylene group, and R² and R³ may be the same or different and each represents a C₁₋₆ straight-chain or branched alkyl group), and preferably it has the isobutylene unit and maleimide unit in alternating repetition.

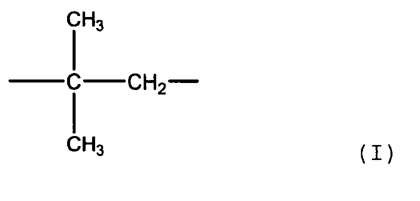

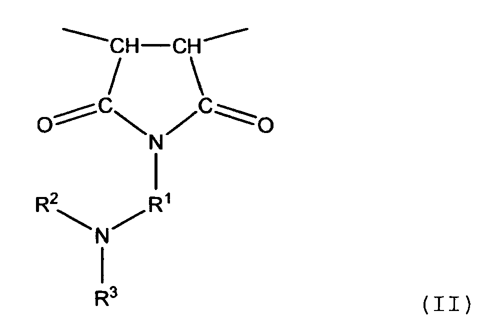

The polymer with a maleimide structure according to the invention may be easily obtained by dehydrating condensation reaction of a polymer comprising an isobutylene unit represented by the following formula (I) and a maleic anhydride unit represented by the following formula (III), with a diamine represented by the following formula (IV). Polymers comprising isobutylene and maleic anhydride can be produced with different monomer proportions by selecting the polymerization method and monomer ratio, but from the viewpoint of facilitating production and reducing cost, a polymer with a monomer ratio of 1 and alternatingly copolymerized is preferred, an example of which is ISOBAM 04 (product of Kuraray Co., Ltd.).

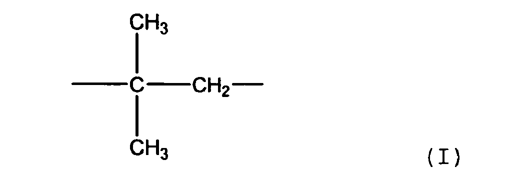

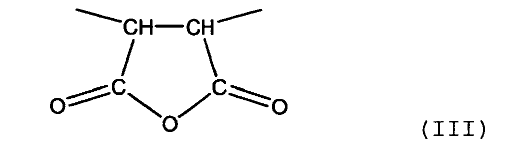

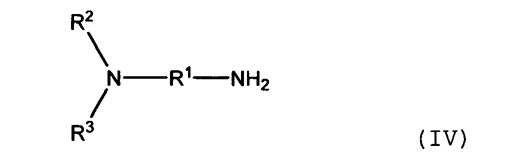

The diamine used for formation of the maleimide may be any one such that the formed maleimide structure satisfies formula (II) above, and preferred examples thereof include 2-dimethylaminoethylamine, 2-diethylaminoethylamine, 2-di-n-propylaminoethylamine, 2-diisopropylaminoethylamine, 2-di-n-butylaminoethylamine, 2-diisobutylaminoethylamine, 2-di-tert-butylaminoethylamine, 2-di-n-pentylaminoethylamine, 2-din-hexylaminoethylamine, 3-dimethylaminopropylamine, 3-diethylaminopropylamine, 3-di-n-propylaminopropylamine, 3-diisopropylaminopropylamine, 3-di-n-butylaminopropylamine, 3-diisobutylaminopropylamine, 3-di-tert-butylaminopropylamine, 3-di-n-pentylaminopropylamine, 3-di-n-hexylaminopropylamine, 4-dimethylaminobutylamine, 4-diethylaminobutylamine, 4-din-propylaminobutylamine, 4-diisopropylaminobutylamine, 4-di-n-butylaminobutylamine, 4-diisobutylaminobutylamine, 4-di-tert-butylaminobutylamine, 4-di-n-pentylaminobutylamine, 4-di-n-hexylaminobutylamine, 2-dimethylamino-2-methylpropylamine, 2-diethylamino-2-methylpropylamine, 2-di-n-propylamino-2-methylpropylamine, 2-diisopropylamino-2-methylpropylamine, 2-di-n-butylamino-2-methylpropylamine, 2-diisobutylamino-2-methylpropylamine, 2-di-tert-butylamino-2-methylpropylamine, 2-di-n-pentylamino-2-methylpropylamine, 2-di-n-hexylamino-2-methylpropylamine, 2-dimethylamino-1,1-dimethylethylamine, 2-diethylamino-1,1-dimethylethylamine, 2-di-n-propylamino-1,1-dimethylethylamine, 2-diisopropylamino-1,1-dimethylethylamine, 2-di-n-butylamino-1,1-dimethylethylamine, 2-diisobutylamino-1,1-dimethylethylamine, 2-di-tert-butylamino-1,1-dimethylethylamine, 2-di-n-pentylamino-1,1-dimethylethylamine, 2-di-n-hexylamino-1,1-dimethylethylamine, 5-dimethylaminopentylamine, 5-diethylaminopentylamine, 5-di-n-propylaminopentylamine, 5-diisopropylaminopentylamine, 5-di-n-butylaminopentylamine, 5-diisobutylaminopentylamine, 5-di-tert-butylaminopentylamine, 5-di-n-pentylaminopentylamine, 5-di-n-hexylaminopentylamine, 3-dimethylamino-2,2-dimethylpropylamine, 3-diethylamino-2,2-dimethylpropylamine, 3-di-n-propylamino-2,2-dimethylpropylamine, 3-diisopropylamino-2,2-dimethylpropylamine, 3-di-n-butylamino-2,2-dimethylpropylamine, 3-diisobutylamino-2,2-dimethylpropylamine, 3-di-tert-butylamino-2,2-dimethylpropylamine, 3-di-n-pentylamino-2,2-dimethylpropylamine, 3-di-n-hexylamino-2,2-dimethylpropylamine, 6-dimethylaminohexylamine, 6-diethylaminohexylamine, 6-di-n-propylaminohexylamine, 6-diisopropylaminohexylamine, 6-di-n-butylaminohexylamine, 6-diisobutylaminohexylamine, 6-di-tert-butylaminohexylamine, 6-di-n-pentylaminohexylamine, 6-din-hexylaminohexylamine, and mixtures of the foregoing, with 2-diethylaminoethylamine, 3-dibutylaminopropylamine and 3-diethylaminopropylamine being especially preferred.

The weight-average molecular weight Mw of the polymer with a maleimide structure in the polyurethane elastic fibers of the invention is preferably 80,000-150,000, and Mw/Mn (Mn = number-average molecular weight) is preferably no greater than 3.5. More preferably, Mw is 90,000-120,000 and Mw/Mn is no greater than 3.0. If the molecular weight is too low, bleed out of the polymer at the surface will tend to cause the polymer drop outs, while if the molecular weight is too high the polymer will not easily disperse in an even manner in the spinning stock solution. If the molecular weight distribution is too large, also, the same phenomenon may be produced by some of the low-molecular-weight components or high-molecular-weight components. The molecular weight referred to here will be explained in more detail below, but it is the molecular weight in terms of PMMA and may be determined by GPC (gel permeation chromatography).

The polymer with a maleimide structure according to the invention has a reactive amine content of no greater than 5.0 × 10⁻² millimole equivalents per gram of polymer. It is preferably no greater than 4.5 × 10⁻² millimole equivalents, more preferably no greater than 4.0 × 10⁻² millimole equivalents and most preferable no greater than preferably 3.0 × 10⁻² millimole equivalents. Including such a polymer can improve the fastness of the polyurethane elastic fibers dyed with acidic dyes, and especially the staining properties onto nylon white fabrics.

The reactive amine is composed primarily of primary amines from the starting compound. The reactive amine content is the content of unreacted amine groups other than those of the polymer skeleton in the polymer with a maleimide structure, and it may be measured by an acid-base titration test, as explained hereunder. A reactive amine content per gram of polymer of 3.0 × 10⁻² millimole equivalents is the detection limit for experimental operation.

A polymer having a maleimide structure and a reactive amine content of no greater than 5.0 × 10⁻² millimole equivalents per gram of polymer, according to the invention, can be suitably obtained by a method of reducing the mole equivalents of diamines in comparison with those of the polymer composed of isobutylene and maleic anhydride in the starting compounds, or by distilling off the residual volatile components by heating under reduced pressure upon completion of the reaction.

The shear viscosity of the polymer with a maleimide structure in the polyurethane elastic fibers of the invention is preferably in the range of 6 to 30 Pa·s (60-300 poise), more preferably in the range of 8 to 30 Pa·s (80-300 poise), even more preferably in the range of 8 to 20 Pa·s (80-200 poise) and most preferably in the range of 9 to 20 Pa·s (90-200 poise) in a 50% dimethylacetamide solution, from the viewpoint of spinning stability. A shear viscosity in this range will avoid gelling. Also, the shear viscosity is preferably 6 to 40 Pa·s (60-400 poise) when the polymer solution is allowed to stand at 55°C for 20 days. If the polymer has a reactive amine content of no greater than 5.0 × 10⁻² millimole equivalents, the polymer solution will have excellent stability. The shear viscosity referred to here will be described in detail hereunder, and it may be measured using a Brookfield viscometer.

By adding the polymer with a maleimide structure to a polyurethane-based polymer in an amount of 0.2 wt%-10 wt%, it is possible to increase the dye affinity and fastness of the polyurethane elastic fibers. The content is more preferably 0.5 wt%-10 wt%. At less than 0.2 wt% the exhibited dyeing affinity will not be sufficient, and at greater than 10 wt% the excessive deep dyeing will result in grinning and poor fastness.

The polyurethane elastic fibers of the invention have a deep dyeing property similar to polyamide fibers. Specifically, they are characterized by having a Blue L value of 20-50 after laundering according to JIS L0844 A2, when a bare single-loop tube-knit fabric of the polyurethane elastic fibers is dyed with a specific blue acidic dye. The value is more preferably 20-35. As will be explained in more detail below, the Blue L value is the lightness of a blue-dyed tube-knit fabric, and it can be measured with a spectrophotometer. A larger L value indicates a lighter color while a smaller value indicates a darker color. In most cases, the Blue L value for polyamide fibers will be 28-32. A Blue L value of greater than 50 results in a lighter color of the polyurethane elastic fibers and thus tends to cause grinning in mixed knitted fabrics with polyamide fibers and the like. Conversely, a value of less than 20 results in excessively dark coloration, causing predominance of the color of the polyurethane elastic fibers at the fabric surface and disrupting the balance of color of the fabric as a whole.

Since the polyurethane elastic fibers of the invention contain a polymer with a specific maleimide structure as mentioned above, sufficiently deep dye affinity is maintained even after laundering, while the washing fastness is excellent and the staining degree onto nylon white fabrics is grade 3.5 or greater based on washing fastness (JIS L0844 A2). A poor staining degree can lead to crocking and consequently staining of other fabrics. As will be explained hereunder, the staining degree is evaluated by observing the staining degree for acidic dyeable fibers.

By addition of the polymer with a maleimide structure, the polyurethane elastic fibers of the invention contain dyeing sites for acidic dyes. The number of dyeing sites is preferably at least 7.0 × 10⁻³ millimole equivalents and no greater than 3.5 × 10⁻¹ millimole equivalents per gram of the polyurethane elastic fibers. A "dyeing site" means an amine site having basicity that is titratable with an acid such as hydrochloric acid.

The polyurethane-based polymer used for the invention may be produced by a known technique involving, for example, reacting a polymer glycol having a number-average molecular weight of 600-5000 with an organic diisocyanate to synthesize a urethane intermediate polymer to form soft segments, and then polymerizing hard segments with a chain extender and sealing the ends with an end terminator. Using a low molecular diol as the chain extender will yield a polyurethane polymer composed of urethane bonds as the hard segment, while using a bifunctional amine will yield a polyurethane-urea polymer composed of urea bonds as the hard segment. As examples of polymer glycols there may be mentioned homopolyether diols such as polyoxyethylene glycol, polyoxypropylene glycol, polyoxytetramethylene glycol and polyoxypentamethylene glycol, copolymer polyether diols composed of oxyalkylenes with 2-6 carbon atoms, polyester diols obtained from one or more dibasic acids such as adipic acid, sebacic acid, maleic acid, itaconic acid, azelaic acid and malonic acid and one or more glycols such as ethylene glycol, 1,2-propylene glycol, 1,3-propylene glycol, 2,2-dimethyl-1,3-propanediol, 1,4-butanediol, 1,3-butanediol, hexamethylene glycol, diethylene glycol, 1,10-decanediol, 1,3-dimethylolcyclohexane and 1,4-dimethylolcyclohexane, polyesteramide diols, polyesterether diols, polylactone diols such as poly-ε-caprolactone diol and polyvalerolactone diol, polycarbonate diol, polyacryl diol, polythioether diol, and polythioester diol, or copolymers or mixtures of these diols.

As examples of organic diisocyanates there may be mentioned methylene-bis(4-phenyl isocyanate), methylene-bis(3-methyl-4-phenyl isocyanate), 2,4-tolylene diisocyanate, 2,6-tolylene diisocyanate, m- and p-xylylene diisocyanate, α,α,α',α'-tetramethyl-xylylene diisocyanate, m- and p-phenylene diisocyanate, 4,4'-dimethyl-1,3-xylylene diisocyanate, 1-alkylphenylene-2,4 and 2,6-diisocyanate, 3-(α-isocyanatoethyl)phenyl isocyanate, 2,6-diethylphenylene-1,4-diisocyanate, diphenyl-dimethylmethane-4,4-diisocyanate, diphenyl ether-4,4'-diisocyanate, naphthylene-1,5-diisocyanate, 1,6-hexamethylene diisocyanate, methylene-bis(4-cyclohexyl isocyanate), 1,3- and 1,4-cyclohexylene diisocyanate, trimethylene diisocyanate, tetramethylene diisocyanate, pentamethylene diisocyanate, hexamethylene diisocyanate, isophorone diisocyanate, and mixtures of the foregoing.

As examples of chain extenders with polyfunctional active hydrogens there may be used hydrazine, polyhydrazine, C₂₋₁₀ straight-chain or branched aliphatic, alicyclic or aromatic compounds containing amino groups with active hydrogens, such as ethylenediamine and 1,2-propylenediamine, the diamines with urea groups mentioned in Japanese Unexamined Patent Publication No. 5-155841, hydroxylamine, water, and low-molecular-weight glycols such as ethylene glycol, 1,2-propylene glycol, 1,3-propylene glycol, 2,2-dimethyl-1,3-propanediol, 1,4-butanediol, 1,3-butanediol, hexamethylene glycol, diethylene glycol, 1,10-decanediol, 1,3-dimethylolcyclohexane and 1,4-dimethylolcyclohexane. Ethylenediamine and 1,2-propylenediamine are preferred.

As examples of end terminators with monofunctional active hydrogens there may be used dialkylamines such as diethylamine and alkyl alcohols such as ethanol. These chain extenders and end terminators may be used alone or in combinations of two or more.

In addition to the polymer with a maleimide structure according to the invention, the polyurethane-based polymer may also contain other added compounds ordinarily used in polyurethane elastic fibers, such as ultraviolet absorbers, antioxidants, light stabilizers, anti-chlorine agents, gasproof stabilizers, coloring agents, delustering agents and fillers.
The polyurethane-based polymer obtained in the manner described above can be shaped into fibers by publicly known dry spinning, wet spinning or melt spinning processes to produce polyurethane elastic fibers.

The obtained polyurethane elastic fibers may also be used with oils including polydimethylsiloxanes, polyester-modified silicon, polyether-modified silicon, amino-modified silicon, mineral oils, mineral-based fine particles such as silica, colloidal alumina or talc, higher fatty acid metal salt powders such as magnesium stearate or calcium stearate, higher aliphatic carboxylic acids, higher aliphatic alcohols, and solid waxes at ordinary temperature such as paraffins and polyethylene, either alone or in any desired combinations as necessary.

The polyurethane elastic fibers of the invention has satisfactory colorability and washing fastness, and minimal areas of grinning, when dyed with acidic dyes in mixed fabrics with acidic dyeable fibers. As acidic dyeable fibers there may be mentioned publicly known polyamide fibers, including notably nylon 6 fibers and nylon 66 fibers.

The polyurethane elastic fibers of the invention, even in mixed fabrics with non-acidic dyeable fibers, have the same coloring properties as non-acidic dyeable fibers in methods wherein, for example, non-acidic dyeable fibers are first dyed with a disperse dye or the like and then the polyurethane elastic fibers are dyed with an acidic dye, and they therefore exhibit minimal areas of grinning and satisfactory fastness so that superior mixed fabrics are obtained. Known polyester fibers may be mentioned as non-acidic dyeable fibers. They may also be used in admixture with other materials depending on the purpose of use, and the types, forms and finenesses of the other materials may be appropriately selected without any particular restrictions. As examples there may be mentioned natural fibers such as cotton, silk, wool and hemp, cupra rayon, viscose rayon, acetate rayon and the like.

### [EXAMPLES]

The present invention will now be explained in further detail through the following examples, with the understanding that these examples are in no way limitative on the invention. The measured values in the examples were determined by the following measuring methods.

### (1) Evaluation of post-laundering Blue L value and staining degree:

A single-loop circular knitting machine (Model CR-C by Koike Kikai Seisakujo, 8.89cm (3.5-inch), 380 strands) was used to produce a bare knitted fabric from test fibers. The bare knitted fabric of the test fibers was weighed out to 1.2 g. A polyamide fiber knitted fabric was prepared using four MIRACOSMO (nylon 6) (56 dT/17 filament) filaments by Toray Co., Ltd. paralleled and knitted into a bare knitted fabric with a single-loop circular knitting machine (Model TN-7 by Koike Kikai Seisakujo, 8.89cm (3.5 inch), 200 strands), and was then weighed out to 4.8 g. The test fiber knitted fabric and the polyamide fiber knitted fabric were scoured at 80°C × 20 minutes and then subjected to dyeing treatment for 60 minutes at 90°C in the same bath under conditions with 1% owf of an acidic half-milling dye (Telon BLUE A2R, product of DyStar), 0.6% owf of a level dyeing agent (SeraGal N-FS, product of DyStar), 4.0% owf of ammonium sulfate, and a liquor to goods ratio of 1:50.

The dyed test fiber bare knitted fabric was laundered according to JIS L0844 A2. Nylon conforming to JIS L0803 was used as an added white fabric. The Blue L value of an air-dried sample, as a tube-knit fabric, was measured using a spectral color-difference meter (SQ-2000, product of Nippon Denshoku Industries Co., Ltd.). A lower L value is preferred, indicating a state of deeper dyeing. Staining of the added white fabric was evaluated according to JIS L0805, using a 5-level scale for the staining degree, from 5 = light staining to 1 = dark staining. A higher level is preferred since it indicates less color staining.

### (2) Measurement of dyeing sites:

After precisely weighing out approximately 400 mg of a 50% dimethylacetamide solution of the polymer with a maleimide structure, it was dissolved in 10 mL of dimethylacetamide, and bromphenol blue was used as an indicator for neutralization titration with a hydrochloric acid-methanol solution (0.16 mol/L), for measurement of the amine value per gram of polymer. The number of dyeing sites per gram of polyurethane elastic fiber was calculated from the amount of polymer with a maleimide structure added to the spinning polymer, and the amine value.

### (3) Measurement of weight-average molecular weight and molecular weight distribution:

The polymer with a maleimide structure was adjusted to 1.0 mg/mL, and the solution was used as a reagent for GPC measurement. An eluent comprising LiBr dissolved in dimethylacetamide to 10 mmol/L was used.

### (Measuring conditions)

Data processing: GPC-8020 by Tosoh Corp.
Columns: Two TSKgel α-M (7.8 mm × 30 cm) columns
Oven temperature: 60°C
Eluent: 1.0 mL/min of dimethylacetamide (10 mmol/L LiBr)
Reagent amount: 200 µL
Detector: RI
Calibration curve: PMMA

### (4) Measurement of reactive amine content:

After precisely weighing out approximately 400 mg of a 50% dimethylacetamide solution of the polymer with a maleimide structure, it was dissolved in 10 mL of dimethylacetamide, and 100 µL of phenyl isocyanate was added prior to stirring at room temperature for 10 minutes. Next, 1 mL of methanol was added and stirring was continued at room temperature for 10 minutes. The solution was subjected to neutralization titration with a hydrochloride-methanol solution (0.16 mol/L) using bromphenol blue as the indicator, for measurement of the amine value per gram of polymer without the reactive amines. Since the amine value measured in (2) is the total of the amine value for the reactive amines and nonreactive amines, the reactive amine content per gram of polymer can be calculated as the difference between that and the value measured here.

### (5) Measurement of shear viscosity:

This was measured using a Brookfield viscometer (RE105U by Toki Sangyo Co., Ltd.).

### (Measuring conditions)

Temperature: 30°C
Sample volume: 0.5 mL
Rotor: 3° × R14
Rotation speed: 10 rpm

### (6) Measurement of breaking strength and elongation:

A tensile tester (Model UTM-III 100, trade name of Orientech Co., Ltd.) was used to measure the tensile breaking strength and elongation of a 5 cm sample length of the test filament at a speed of 50 cm/min, under conditions of 20°C, 65% humidity.

### (7) Grinning:

An Okuma single circular knitting machine (76.2cm (30 inch), 24 gauge) was used for paralleling of two test filaments through a single aperture at a draft of 1.7, and three nylon 6 (MIRACOSMO, product of Toray Co., Ltd.) 56 dT/17 filaments were used with one aperture per filament, for paralleling with a total of four apertures to prepare a mixed knitted fabric. After scouring for 20 minutes at 80°C, the fabric was dyed.

The dyeing was carried out after weighing 6 g of the mixed fabric. The dyeing treatment was carried out for 60 minutes at 90°C under conditions with 1% owf of an acidic half-milling dye (Telon BLUE A2R, product of DyStar), 0.6% owf of a level dyeing agent (SeraGalN-FS, product of DyStar), 4.0% owf of ammonium sulfate, and a liquor to goods ratio of 1:50.

The mixed dyed product (fabric) was stretched and visually examined for grinning, which was judged on a scale of level 1 to 4. Level 4 was assigned for absolutely no apparent difference in dyeing concentration between the polyurethane elastic fibers and polyamide fibers, level 3 was assigned for sufficient dyeing of the polyurethane elastic fibers but with a slight difference in dyeing concentration compared to the polyamide fibers, level 2 was assigned for satisfactory dyeing of the polyurethane elastic fibers but with a significant difference in dyeing concentration compared to the polyamide fibers, clearly distinguishing the polyurethane elastic fibers, and level 1 was assigned for grinning that clearly distinguished the polyurethane elastic fibers, which were essentially undyed.

### (8) Spinning stability:

Dry spinning was performed with a single end spinning machine at a spinning speed of 800 m/min and a hot air temperature of 325°C, to produce 44 dT/4 filament fibers. Spinning was continued for 1 hour, and evaluation was performed according to the following criteria

### (Evaluation criteria)

A: No yarn breakage
B: 1-2 yarn breaks
C: 3-5 yarn breaks
D: 6 or more yarn breaks (non-spinnable)

### (Example 1)

After combining 40 g of an isobutylene-maleic anhydride alternating copolymer with an average molecular weight of about 60,000 (ISOBAM 04 by Kuraray Co., Ltd.), 32.1 g of diethylaminopropylamine and 160 g of dimethylacetamide, the mixture was stirred at 50°C for 1 hour and at 100°C for 1 hour under a nitrogen atmosphere and then heated for 4 hours with reflux at 180°C while distilling off the generated water. The residual volatile components were distilled off under reduced pressure, and the obtained polymer was dissolved in dimethylacetamide to a 50% solution. The obtained polymer had a weight-average molecular weight Mw of 1.0 × 10⁵, a molecular weight distribution Mw/Mn of 2.7, an amine value of 3.64 mmol/g and a reactive amine content of no greater than 3.0 × 10⁻² millimole equivalents. The shear viscosity of the 50% dimethylacetamide solution was 10.2 Pa·s (102 poise). After allowing the solution to stand at 55°C for 20 days, the shear viscosity was measured to be 145 poise and virtually no coloration was observed.

A mixture of 1500 g of polytetramethylene ether glycol with an average molecular weight of 1800 and 312 g of 4,4'-diphenylmethane diisocyanate was stirred under a nitrogen gas stream at 60°C for a period of 90 minutes for reaction to obtain a polyurethane prepolymer having isocyanate groups at both ends. The prepolymer was then cooled to room temperature and 2700 g of dimethylacetamide was added to dissolution to prepare a polyurethane prepolymer solution.

After then dissolving 23.4 g of ethylenediamine and 3.7 g of diethylamine in 1570 g of dried dimethylacetamide, the solution was added to the aforementioned prepolymer solution at room temperature to obtain a polyurethane-urea polymer solution with a viscosity of 220 Pa·s (2200 poise) (30°C).

With the polyurethane-urea polymer solution there were mixed 1.0 wt% of an isobutylene addition product as a polyaddition product of p-cresol and dicyclopentadiene, 0.4 wt% of Sumilizer GA-80 (product of Sumitomo Chemical Co., Ltd.), 0.2 wt% of 2-(2H-benzotriazol-2-yl)-4,6-bis(2-phenylpropan-2-yl)phenol, 5.0 wt% of hydrotalcite and 1.0 wt% of the previously produced polymer with a maleimide structure (shear viscosity: 104 poise), with respect to the polyurethane solid content, as a spinning stock solution.

Dry spinning was performed with this spinning stock solution at a spinning speed of 800 m/min and a hot air temperature of 325°C, to produce 44 dT/4 filament fibers. No yarn breakage occurred, and the spinning stability was satisfactory. The tensile breaking strength of the fibers is shown in Table 1. A breaking strength of at least 40 cN for 44dT elastic fibers is satisfactory for practical use.

A bare knitted fabric of the obtained polyurethane elastic fibers was dyed blue, and the Blue L value and staining degree after laundering were evaluated. The results are shown in Table 1. A mixed knitting fabric comprising the polyurethane elastic fibers and nylon 6 fibers was also prepared and dyed, and the degree of grinning was evaluated. The evaluation results are shown in Table 1.

### (Example 2)

Spinning was performed under the same conditions using the same spinning stock solution as in Example 1, except that the amount of addition of the polymer with a maleimide structure was 2.0 wt%. The spinning stability was satisfactory. The tensile breaking strength, the Blue L value and staining degree after laundering and the degree of grinning were evaluated in the same manner as Example 1. The evaluation results are shown in Table 1.

### (Example 3)

Spinning was performed under the same conditions using the same spinning stock solution as in Example 1, except that the amount of addition of the polymer with a maleimide structure was 4.0 wt%. The spinning stability was satisfactory. The tensile breaking strength, the Blue L value and staining degree after laundering and the degree of grinning were evaluated in the same manner as Example 1. The evaluation results are shown in Table 1.

### (Comparative Example 1)

Spinning was performed under the same conditions as Example 1, except that no polymer with a maleimide structure was added. The tensile breaking strength, the Blue L value and staining degree after laundering and the degree of grinning were evaluated in the same manner as Example 1. The evaluation results are shown in Table 1.

### (Comparative Example 2)

Spinning was performed under the same conditions using the same spinning stock solution as in Example 1, except that the amount of addition of the polymer with a maleimide structure was 15 wt%. Some yarn breakage occurred, and the spinning was slightly unstable. The Blue L value and staining degree after laundering and the degree of grinning were evaluated in the same manner as Example 1. The evaluation results are shown in Table 1.

### (Comparative Example 3)

Following the method described in Patent document 9, 40 g of the ISOBAM 04, 33.8 g of diethylaminopropylamine and 160 g of dimethylacetamide, which were used in Example 1, were combined, the mixture was stirred at 50°C for 1 hour and at 100°C for 1 hour under a nitrogen atmosphere and then heated for 4 hours with reflux at 180°C while distilling off the generated water, and then a 50% dimethylacetamide solution of a polymer with a maleimide structure was prepared without distilling off the residual volatile components. The reactive amine content of the polymer was 5.5 × 10⁻² millimole equivalents, and the shear viscosity was 14 Pa·s (140 poise). The polymer was used for spinning under the same conditions as Example 1, and the Blue L value and staining degree after laundering and the degree of grinning were evaluated. The evaluation results are shown in Table 1. When the solution was allowed to stand at 55°C for 20 days, the shear viscosity was 55 Pa·s (550 poise) and coloration and gelling were observed.

[Table 1]

**Table 1**

| | Example 1 | Example 2 | Example 3 | Comp. Ex. 1 | Comp. Ex. 2 | Comp. Ex. 3 |
|---|---|---|---|---|---|---|
| Spinning stability | A | A | A | A | C | A |
| Number of dyeing sites (mmol/g) | 3.3 × 10⁻² | 6.6 × 10⁻² | 1.3 × 10⁻¹ | 0 | 4.9 × 10⁻¹ | 3.4 × 10⁻² |
| Breaking strength (cN) | 54.8 | 53.9 | 52.5 | 52.4 | 47.4 | 54.1 |
| Breaking elongation (%) | 624 | 616 | 614 | 623 | 572 | 626 |
| Post-laundering Blue L value | 35 | 28 | 25 | 73 | 18 | 36 |
| Staining degree (level) | 4.5 | 4.5 | 4.0 | 5.0 | 2.0 | 3.0 |
| Grinning (level) | 3.5 | 4.0 | 3.5 | 1.0 | 2.0 | 3.5 |

The results of Table 1 show that the polyurethane elastic fibers obtained according to the invention exhibited satisfactory dye affinity and fastness, without grinning, and therefore have high commercial value.

### [Industrial Applicability]

The polyurethane elastic fibers of the invention have excellent spinning stability, sufficient dyeability with acidic dyes and superior fastness, and therefore clothing articles without grinning and with excellent visual quality can be obtained from mixed fabrics containing the polyurethane elastic fibers, and the fibers can be supplied in a stable manner.

## Claims

1. Polyurethane elastic fibers comprising 0.2 wt%-10 wt% of a polymer with a maleimide structure comprising an isobutylene unit represented by the following formula (I) and a maleimide unit represented by the following formula (II) (wherein R¹ represents a C₂₋₆ straight-chain or branched alkylene group, and R² and R³ may be the same or different and each represents a C₁₋₆ straight-chain or branched alkyl group), having a Blue L value of 20-50 after laundering according to JIS L0844 A2 for dyeing of a single-loop tube-knit fabric with a specific blue acidic dye, and having a staining degree of grade 3.5 or greater on nylon fabrics wherein the maleimide structure-containing polymer has a reactive amine content of no greater than 5.0 x 10⁻² millimole equivalents per gram of polymer 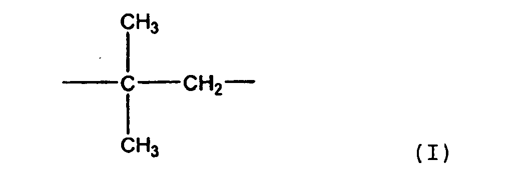 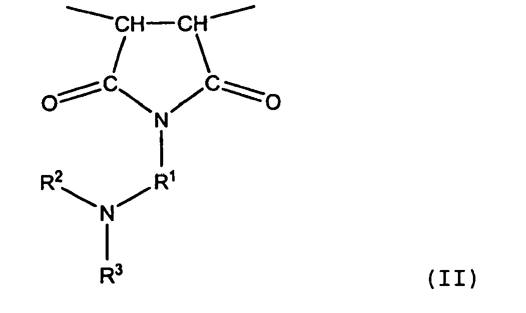 wherein the Blue L value is evaluated as described in paragraph [0035].

2. Polyurethane elastic fibers according to claim 1,
wherein the density of dyeing sites for the acidic dye are at least 7.0 × 10⁻³ millimole equivalent and no greater than 3.5 × 10⁻¹ millimole equivalent per gram of fibers.

3. Polyurethane elastic fibers according to claim 1 or 2, wherein the weight-average molecular weight Mw of the maleimide structure-containing polymer is 80,000-150,000, and Mw/Mn (Mn = number-average molecular weight) is no greater than 3.5.

4. A mixed fabric comprising polyurethane elastic fibers according to any one of claims 1 to 3 and another acidic dyeable fiber.

5. A mixed fabric according to claim 4, wherein the other acidic dyeable fiber is a polyamide fiber.

6. A mixed fabric comprising polyurethane elastic fibers according to any one of claims 1 to 3 and another non-acidic dyeable fiber.

7. A mixed fabric according to claim 6, wherein the other non-acidic dyeable fiber is a polyester fiber.

## Patentansprüche

1. Elastische Polyurethanfasern, die 0,2 Gew.-% bis 10 Gew.-% eines Polymers mit einer Maleinimid-Struktur umfassen, das eine durch die folgende Formel (I) dargestellte Isobutylen-Einheit und eine durch die folgende Formel (II) dargestellte Maleinimid-Einheit umfasst (wobei R¹ für eine geradkettige oder verzweigte C₂₋₆-Alkylengruppe steht und R² und R³ gleich oder verschieden sein können und jeweils für eine geradkettige oder verzweigte C₁₋₆-Alkylgruppe stehen) und nach dem Waschen gemäß JIS L0844 A2 einen Blue-L-Wert von 20-50 zum Färben einer Einschlaufen-Rundstrickware mit einem spezifischen blauen sauren Färbstoff aufweist und auf Nylonwaren einen Färbegrad von Grad 3,5 oder darüber aufweist, wobei das die Maleinimid-Struktur enthaltende Polymer einen Gehalt an reaktivem Amin von nicht mehr als 5,0 x 10⁻² Millimoläquivalenten pro Gramm Polymer aufweist: 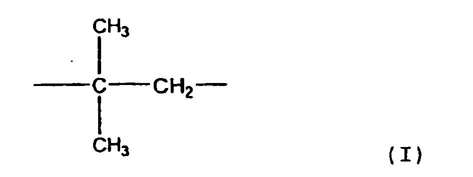 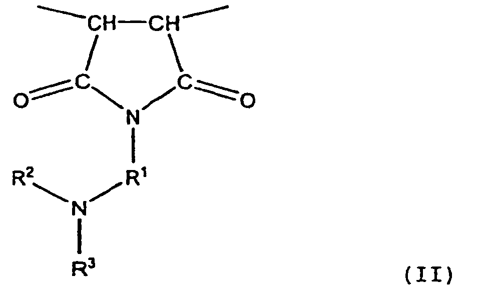 wobei der Blue-L-Wert so bewertet wird, wie es in Abschnitt [0035] beschrieben ist.

2. Elastische Polyurethanfasern gemäß Anspruch 1, wobei die Dichte der Färbestellen für den sauren Farbstoff wenigstens 7,0 x 10⁻³ Millimoläquivalente und nicht mehr als 3,5 x 10⁻¹ Millimoläquivalente pro Gramm Fasern beträgt.

3. Elastische Polyurethanfasern gemäß Anspruch 1 oder 2, wobei das Gewichtsmittel des Molekulargewichts Mw des die Maleinimid-Struktur enthaltenden Polymers 80 000 bis 150 000 beträgt und Mw/Mn (Mn = Zahlenmittel des Molekulargewichts) nicht größer als 3,5 ist.

4. Mischgewebe, das elastische Polyurethanfasern gemäß einem der Ansprüche 1 bis 3 und eine andere, mit einem sauren Farbstoff färbbare Faser umfasst.

5. Mischgewebe gemäß Anspruch 4, wobei die andere, mit einem sauren Farbstoff färbbare Faser eine Polyamidfaser ist.

6. Mischgewebe, das elastische Polyurethanfasern gemäß einem der Ansprüche 1 bis 3 und eine andere, nicht mit einem sauren Farbstoff färbbare Faser umfasst.

7. Mischgewebe gemäß Anspruch 6, wobei die andere, nicht mit einem sauren Farbstoff färbbare Faser eine Polyesterfaser ist.

## Revendications

1. Fibres élastiques en polyuréthane comprenant de 0,2% en poids à 10% en poids d'un polymère ayant une structure de maléimide comprenant un motif d'isobutylène représenté par la formule (I) suivante et un motif de maléimide représenté par la formule (II) suivante (dans laquelle R¹ représente un groupe alcoylène, linéaire ou ramifié, ayant de 2 à 6 atomes de carbone et R² et R³ peuvent être identiques ou différents et représentent chacun un groupe alcoyle, linéaire ou ramifié, ayant de 1 à 6 atomes de carbone) ayant une valeur Blue L de 20 à 50 après lavage suivant JIS L0844 A2 pour teindre un tricot tubulaire simple boucle par un colorant acide bleu spécifique, et ayant un degré de tachage de qualité 3,5 ou plus grand sur des étoffes en nylon, dans lesquelles le polymère contenant une structure maléimide a une teneur en amine réactive qui n'est pas supérieure à 5,0 x 10⁻² équivalent en millimole par gramme de polymère, 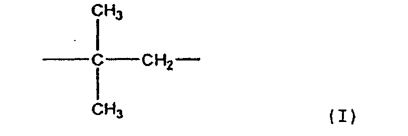 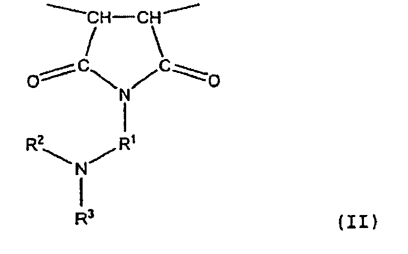 la valeur Blue L étant évaluée comme décrit au paragraphe [0035].

2. Fibres élastiques en polyuréthane suivant la revendication 1, dans lesquelles les densités des sites de teinture pour le colorant acide sont d'au moins 7,0 x 10⁻³ équivalent en millimole et non supérieures à 3,5 x 10⁻¹ équivalent en millimole par gramme de fibres.

3. Fibres élastiques en polyuréthane suivant la revendication 1 ou 2, dans lesquelles la masse moléculaire moyenne en poids Mw du polymère contenant une structure maléimide va de 80.000 à 150.000 et Mw/Mn (Mn = masse moléculaire moyenne en nombre) n'est pas supérieur à 3,5.

4. Etoffe mélangée comprenant des fibres élastiques en polyuréthane suivant l'une quelconque des revendications 1 à 3 et une autre fibre pouvant être teinte par un colorant acide.

5. Etoffe mélangée suivant la revendication 4, dans laquelle l'autre fibre pouvant être teinte par un colorant acide est une fibre en polyamide.

6. Etoffe mélangée comprenant des fibres élastiques en polyuréthane suivant l'une quelconque des revendications 1 à 3 et une autre fibre pouvant être teinte par un colorant non acide.

7. Etoffe mélangée suivant la revendication 6, dans laquelle l'autre fibre pouvant être teinte par un colorant non acide est une fibre de polyester.
